# EUROPEAN PATENT APPLICATION

(11) **EP 4 338 982 A1**
(43) Date of publication of application: **20.03.2024**
(21) Application number: 23197443.7
(22) Date of filing: 14.09.2023
(51) Int. Cl.: B60C 7/14

(54) **REINFORCED-RUBBER SPOKE FOR A NON-PNEUMATIC TIRE**

(30) Priority: 16.09.2022 US 202217932684
(71) Applicant: The Goodyear Tire & Rubber Company, Akron, OH 44316 (US)
(72) Inventor: SPORTELLI, Francesco, 3249 Bettembourg (LU); BOES, Claude Ernest Felix, L-9147 Erpeldange (LU)
(74) Representative: Kutsch, Bernd

(57) **Abstract**

A reinforced rubber spoke (18) for a non-pneumatic tire (10) is disclosed. The reinforced rubber spoke (18) comprises a radially outer end (20) for connecting the spoke (18) to a shearband (22), a radially inner end (22) for connecting the spoke (18) to a hub (17) and a web (24) extending between the radially inner end and the radially outer end, the web (24) comprising therein reinforcement cord (32) serpentining between the radially inner end and the radially outer end. Also, a non-pneumatic tire (10) is disclosed having an annular tread (20) for contacting ground, a shearband (22) supporting the tread (20) and a connecting structure (16) for connecting the shearband (22) to a wheel hub (17). The connecting structure (16) comprises a plurality of a reinforced rubber spokes (18) as specified above.

## Description

### Field of the Invention

The present invention relates generally to non-pneumatic tires and, more particularly, to reinforced-rubber spokes for a non-pneumatic tires.

### Background of the Invention

In recent years, non-pneumatic tires are seen to gain traction since they provide advantages in tire performance without relying on inflation for supporting the load applied to the tire by the car. One of the challenges of non-pneumatic tires is providing an adequate connecting structure for connecting the annular tread to the wheel hub, in particular one of the challenges is to provide adequate reinforcement structure to the spokes of the connecting structure without overly complicating the manufacture process thereof.

EP 3 368 335 A1 relates to a spoke for a non-pneumatic wheel. The spoke may be manufactured with a reinforcement structure having reinforcement elements and one or more layers of material. The spoke can also be provided in various shapes and configurations. The spoke includes anchors that allow the spoke to be more readily incorporated into, or removed from, a non-pneumatic wheel. More particularly, the anchors also allow the spoke to be joined as one-piece with the non-pneumatic wheel or releasably connected on one or both ends with the non-pneumatic wheel.

EP 3 519 204 A1 relates to a spoke for a wheel attaching an outer tread to a hub, the spoke having a first and second spoke elements joined by a joint body comprised of an elastomer connecting the first spoke element to a second spoke element.

WO 2019/050547 A1 relates to a non-pneumatic wheel comprising a plurality of spokes attaching an outer tread band to a hub, each spoke having first and second spoke elements joined by a body comprised of an elastomer connecting the first spoke element to the second spoke element.

### Summary of the Invention

The invention relates to a reinforced rubber spoke for a non-pneumatic tire in accordance with claim 1 and to a non-pneumatic tire in accordance with claim 5 or 6 respectively.

Dependent claims refer to preferred embodiments of the invention.

In a first preferred aspect, the invention relates to a reinforced-rubber spoke for a non-pneumatic tire comprising: a radially outer end for connecting the spoke to a shearband, a radially inner end for connecting the spoke to a hub, and a web extending between the radially inner end and the radially outer end, the web comprising therein reinforcement cord serpentining between the radially inner end and the radially outer end.

According to a preferred embodiment, the serpentining reinforcement cord is embedded between a first and a second layer of rubber.

According to a preferred embodiment, the serpentining reinforcement cord may be located in a median surface of the web.

According to a preferred embodiment, the serpentining reinforcement cord may be located in an off-median inner surface of the web.

According to a preferred embodiment, the serpentining reinforcement cord may comprise first U-turns at the radially outer end and second U-turns at the radially inner end of the spoke.

According to a preferred embodiment, the spoke may comprise an array of first holes at the radially outer end, the first U-turns being centered on the first holes, and an array of second holes at the radially inner end, the second U-turns being centered on the second holes.

According to a preferred embodiment, at least one of the first and second holes may be through-holes extending through the spoke.

According to a preferred embodiment, the spoke may comprise a tube arranged between each U-turn and the corresponding hole.

According to a preferred embodiment, the web may be planar.

According to a preferred embodiment, the web may be curved.

According to a preferred embodiment, the radially outer end may comprise a flange for connecting the spoke to a shearband.

According to a preferred embodiment, the radially inner end may comprise a flange for connecting the spoke to a hub.

In a second preferred aspect, the invention relates to a non-pneumatic tire comprising: an annular tread for contacting ground, a shearband supporting the tread, a connecting structure for connecting the shearband to a wheel hub, the connecting structure comprising a plurality of a reinforced-rubber spokes, each spoke comprising a radially outer end for connecting the spoke to the shearband a radially inner end for connecting the spoke to the wheel hub, a web extending between the radially inner end and the radially outer end, the web comprising reinforcement cord sandwiched between a first and a second layer of rubber, the reinforcement cord serpentining between the radially inner end and the radially outer end.

According to a preferred embodiment, the first and second layers of rubber may be symmetric, so that the serpentining reinforcement cord is located in a median surface of the web.

According to a preferred embodiment, the first and second layers of rubber may have different thickness, so that the serpentining reinforcement cord is located in an off-median surface of the web.

According to a preferred embodiment, the serpentining reinforcement cord may comrpise U-turns at the radially outer end and oppositely oriented U-turns at the radially inner end of the spoke.

According to a preferred embodiment, the spoke may comprise an array of first holes at the radially outer end, the U-turns at the radially outer end being centered each on a respective one of the first holes, and an array of second holes at the radially inner end, the U-turns at the radially inner end being centered each on a respective one of the second holes.

According to a preferred embodiment, the first holes or the second holes, or both, may be through-holes extending through the spoke.

According to a preferred embodiment, the spoke may comprise a tube arranged between each U-turn and the respective hole.

According to a preferred embodiment, the web of each spoke may be essentially planar, or planar.

According to a preferred embodiment, the webs of the spokes may be curved.

According to a preferred embodiment, the webs of the spokes may all be curved in the same angular direction about a tire axis.

According to a preferred embodiment, each of the radially outer ends of the spokes may comprise a flange for connecting the spoke to the shearband.

According to a preferred embodiment, each of the radially inner ends of the spokes may comprise a flange for connecting the spoke to a hub.

### Definitions

As used herein, the term "rubber" is intended to include both natural rubber compositions and synthetic rubber compositions. Unless otherwise specified, "rubber" designates a cured rubber (typically obtained from unsaturated rubber by sulfur or non-sulfur vulcanization). The rubber need not be completely cured, i.e., its molecular chains may contain residual cure sites (e.g., allylic positions) available for crosslinking with other molecular chains. The expression "rubber composition" "compounded rubber" and "rubber compound" may be used interchangeably to refer to rubber (elastomer) which has been blended or mixed with various ingredients and materials, e.g., reinforcing fillers, such as carbon black, precipitated amorphous silica, or the like, and then cured. Specific examples of rubbers include neoprene (polychloroprene), polybutadiene (e.g., cis-1,4-polybutadiene), polyisoprene (e.g., cis-1,4-polyisoprene), butyl rubber, halobutyl rubber (such as, e.g., chlorobutyl rubber or bromobutyl rubber), styrene/isoprene/butadiene rubber, copolymers of 1,3-butadiene or isoprene with monomers such as, e.g., styrene, acrylonitrile and methyl methacrylate. Other types of rubber include carboxylated rubber, silicon-coupled rubber, or tin-coupled star-branched polymers.

In the present document, the term "serpentining" refers to an element, in particular the reinforcement cord, lying in a winding path.

The expression "wheel hub" or "hub" are used herein to refer to the central part of the non-pneumatic tire for receiving the axle from a car and enabling the non-pneumatic tire to spin around the axle.

As used herein, an "annular tread" is the outermost part of the non-pneumatic tire for contacting the ground.

As used herein, "spokes" is a part of a connecting structure for connecting the annular tread (or, possibly, a shearband supporting the tread) to the wheel hub.

As used herein, a "flange" is a projecting edge on the spoke, e.g., for strengthening and/or for attaching to another element.

As used herein, a "web" connects the radially inner end and the radially outer end of the spoke.

The expressions "axial" and "axially" are used herein to refer to lines or directions that are parallel to the axis of rotation of the tire.

The expressions "radial" and "radially" are used to mean the direction of a line intersecting the tire's axis of rotation at right angle.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### Brief Description of the Drawings

The invention will be described by way of example and with reference to the accompanying drawings in which:
FIG. 1 is a schematic representation of a non-pneumatic tire according to an aspect of the present invention;
FIG. 2 schematically depicts a top view of a step of a method for producing the spokes;
FIG. 3 schematically depicts steps of the manufacturing process viewed from the side;
FIG. 4 schematically depicts a step of the manufacturing process viewed from the side;
FIG. 5 schematically depicts part of the manufacturing process viewed from the side (as in Fig. 3);
FIG. 6 schematically depicts steps of the manufacturing process for obtaining a half cured spoke;
FIG. 7 schematically depicts a step of the manufacturing process wherein the shearbands are fixed to the spokes; and
FIG. 8 schematically depicts a top view of a step of a method for producing the spokes, according to a further embodiment.

The reader's attention is drawn to the fact that the drawings are not to scale. Furthermore, for the sake of clarity, proportions between height, length and/or width may not have been represented correctly.

### Detailed Description of Preferred Embodiments of the Invention

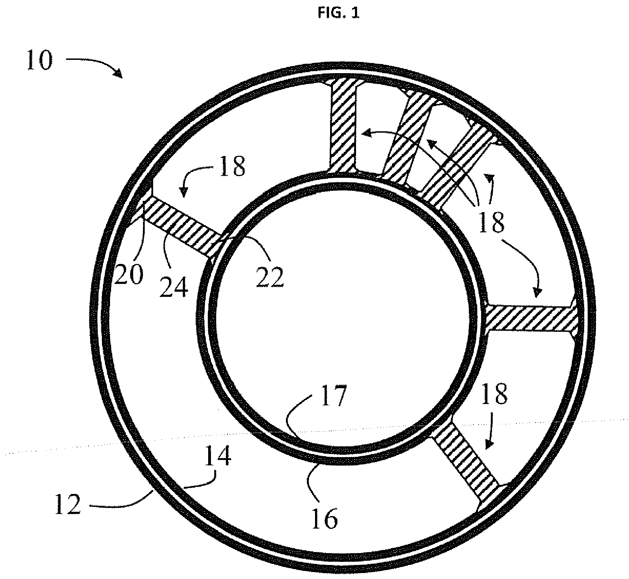

Fig. 1 shows a schematic representation of a non-pneumatic tire 10 (NPT) according to an aspect of the present invention. The NPT 10 comprise an annular tread 12 for contacting ground. The NPT 10 further comprises radially outer shearband 14 supporting the tread 12. Also the NPT 10 comprises wheel hub 17configured to receive the axle of the car (not depicted). Fig. 1 also depicts a connecting structure for connecting the radially outer shearband 14 to the wheel hub 17.

The connecting structure comprises a plurality of a reinforced-rubber spokes 18. For the sake of clarity, only a subset of the spokes are represented.
'A radially inner shearband 16 may be provided between the wheel hub 17 and the connecting structure. The spokes 18 may be in direct contact with the radially inner shearband 16. In an embodiment, the radially inner shearband 16 may be dispensed with. In another embodiment, the radially inner shearband 16 may be replaced by (reinforced) plastic. In that case, the spokes 18 may be in direct contact with the (reinforced) plastic.

In particular, the rubber spokes 18 comprise a radially outer end 20 for connecting the spoke 18 to the radially outer shearband 14 and a radially inner end 22 for connecting the spoke to the wheel hub 17 (or the radially inner shearband 16 as depicted in Fig. 1 or the (reinforced) plastic).

The radially outer end 20 of the rubber spokes 18 may comprise a flange for connecting the spoke to the shearband 14. The radially inner end 22 rubber spokes 18 may comprise a flange for connecting the spoke to the wheel hub 17 (or the radially inner shearband 16 as depicted in Fig. 1 or the (reinforced) plastic).

The rubber spokes 18 may comprise a web 24 extending between the radially inner end 22 and the radially outer end 20. The web may comprise a reinforcement cord in its core. In particular, as will be further described below, the reinforcement cord may be sandwiched between first and second layers of rubber. The reinforcement cord may be serpentining between the radially outer end 20 and the radially inner end 22.

In the following, different steps, according to several embodiments, for producing the spokes 18 and the NPT 10 will be described for illustrating the structure of the spokes 18 and their integration in the NPT 10.

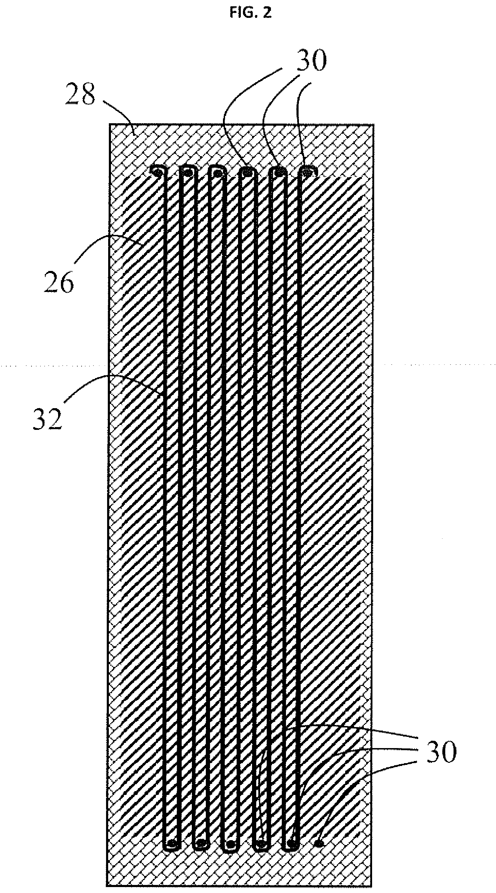

Fig. 2 schematically depicts a top view of a step of a method for producing the spokes 18. A first layer 26 of uncured (e.g. green) rubber is deposited on a mold element 28. The mold element 28 is provided with pins 30 (e.g. metal pins). The pins 30 are located at the radially inner end and the radially outer end of the spoke being manufactured. In particular, a first array of first pins may be provided at the radially outer end and a second array of second pins may be provided at the radially outer end. The first pins may be arranged along a first straight line. The second pins may be arranged along a second straight line. The first pins and second pins may be identical or different. The location of the first and second pins may be distributed homogeneously on the respective straight lines. The distance to the nearest (neighbor) pin of a (particular) pin may be the same or different for each pin.

The first layer of rubber 26 is deposited between the pins 30, i.e. between the radially inner end and the radially outer end of the spoke being manufactured. A reinforcement cord 32 is provided on top of the first layer 26 of rubber. The reinforcement cord 32 serpentines between the radially inner end and the radially outer end. The reinforcement cord 32 comprise first U-turns at the radially outer end, around the (first) pins 30, and second U-turns, around the (second) pins 30, at the radially inner end. In an embodiment, as depicted, the reinforcement cord 32 alternates between the radially inner end and the radially outer end. The reinforcement cord 32 may regularly (periodically) alternate between the radially inner end and the radially outer end.

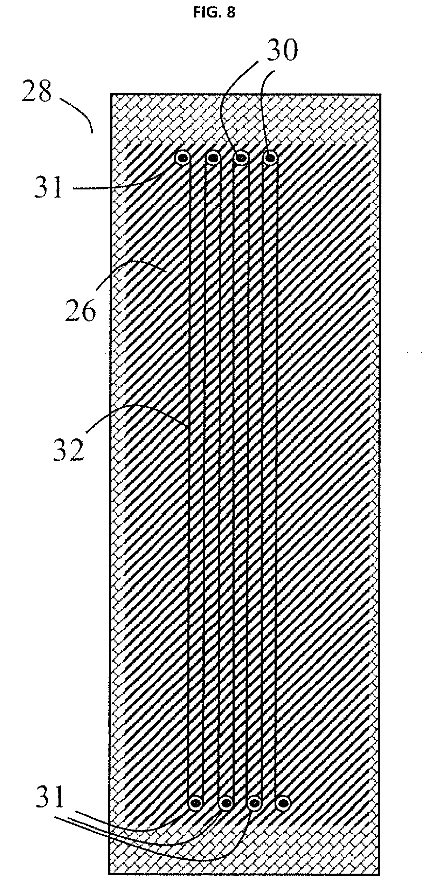

It is worthwhile noting that a tube 31 may be arranged between each U-turn and the corresponding pin, as depicted in Fig. 8. The tube may have the same longitudinal axis as the pin it covers. The tube 31 may comprise, or consist of, half-cured or cured rubber. The tube 31 may comprise, or consist of, a metal, e.g. steel and/or aluminum. The tube may comprise, or consist of, a polymer having preferably a high melting point (e.g. above 150°C), e.g. nylons, cross-linked poly-ethylene (PEX). The tube 31 may comprise a radially outer layer comprising, or consisting of, half-cured or cured rubber. The tube 31 has a radially outer surface which may comprise one or more recesses (e.g. one or more notches) for receiving the reinforcement cord. Of course, other configurations are contemplated for improving retention of the reinforcement cord after curing of the spoke. The outer surface may be roughened or textured, preferably excluding the notch. As will be appreciated the tube 31 allows easier extraction from the mold of the spoke after cure. Also, the tube 31 may reduce potential movements of the reinforcement cord at the U-turns under the dynamic stresses generated by a rolling tire comprising the spoke.

It may be beneficial to fix the reinforcement cord 32 to one or more pins 30, e.g. the extremal pins in order to keep the reinforcement cord 32 under tension and mitigate the risk of movement of the reinforcement cord 32 during a subsequent step of curing. The fixing may be carried out by making a knot around the extremal pins. Alternatively or additionally, the fixing may be effected by making a knot and stapling the knot to the first layer 26 of uncured rubber with one or more (metal or polymer) staples. The knot may thus act as a stopping knot. Also, alternatively or additionally, the knot may be pushed into the uncured rubber.

In a preferred embodiment, the extremal pins may be additional pins, i.e. different from the pins 30. The extremal pins may be off centered with respect to the first and/or second arrays of pins. This allows for leaving more space for making the knot.

The knot may be a Marlinspike Hitch. Of course, other knots are equally possible. The reinforcement cord 32 may be is cut on the outer ends of the knots.

The reinforcement cord 32 may be made of steel cords and/or cords formed from nylon fiber, polyester fiber, fiber glass, carbon fiber, aramid fiber, glass fiber, polyethylene fiber, polyethylene terephthalate fiber, or other reinforcement materials. Different reinforcement materials could be combined. It is worthwhile noting that a "cord" may include one or plural strands.

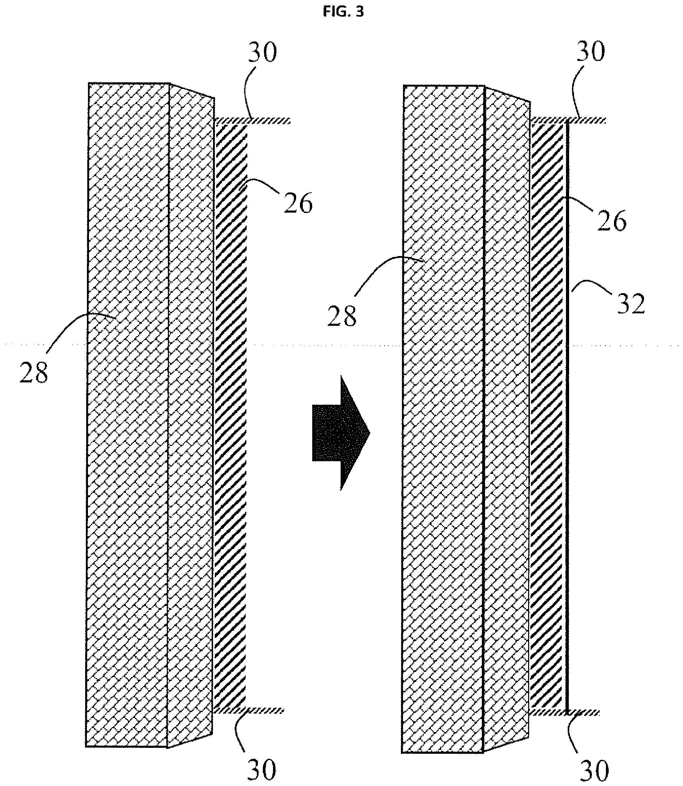

Fig. 3 schematically depicts steps of the manufacturing process viewed from the side. The first layer 26 of rubber is deposited on the mold element 28, between the pins 30. The height of the pins 30 is greater than the thickness of the first layer 26. In a subsequent step, the reinforcement cord 32 is provided.

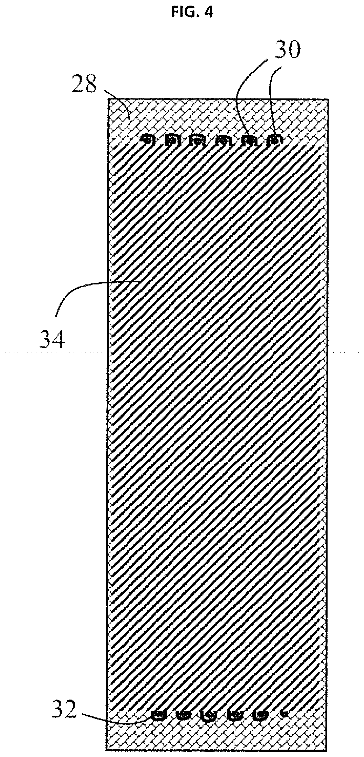

In a further step, as schematically depicted in Fig. 4, a second layer 34 of uncured (e.g. green) rubber is deposited. The second layer 34 is deposited on the first layer 26, also on the reinforcement cord 32. The reinforcement cord 32 is thereby sandwiched between the first and second layers 26, 34. Here also, the second layer 34 is deposited between the pins 30.

The thickness of the first layer 26 may be the same as the thickness of the second layer 34. In that case, the reinforcement cord 32 is located in a median surface of the web 24. In another embodiment, the thickness of the first layer 26 may be the different than the thickness of the second layer 34. In that case, the reinforcement cord 32 is located in an off-median inner surface of the web.

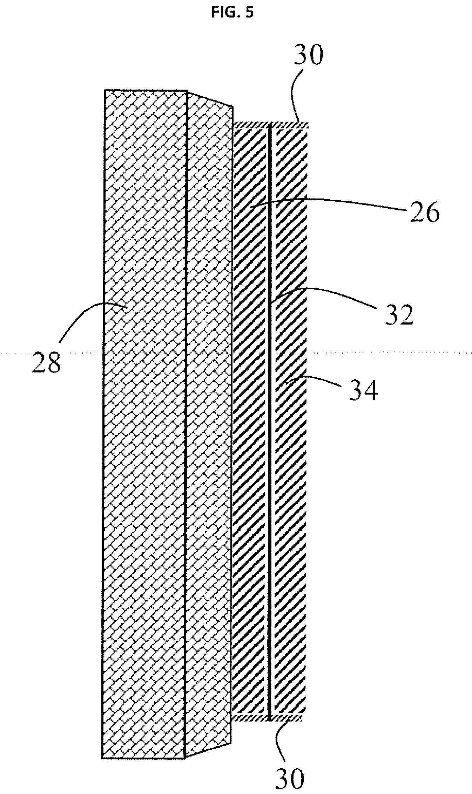

Fig. 5 schematically depicts part of the manufacturing process viewed from the side. (as in Fig. 3), wherein the second layer 34 of uncured (e.g. green) rubber has been deposited on the first layer 26 and the reinforcement cord 32. In the depicted embodiment, the reinforcement cord 32 is located in a median surface of the web 24. As also shown in Fig. 5, the height of the pins 30 is at least higher than the thickness of the first and second layers 26, 34 of rubber.

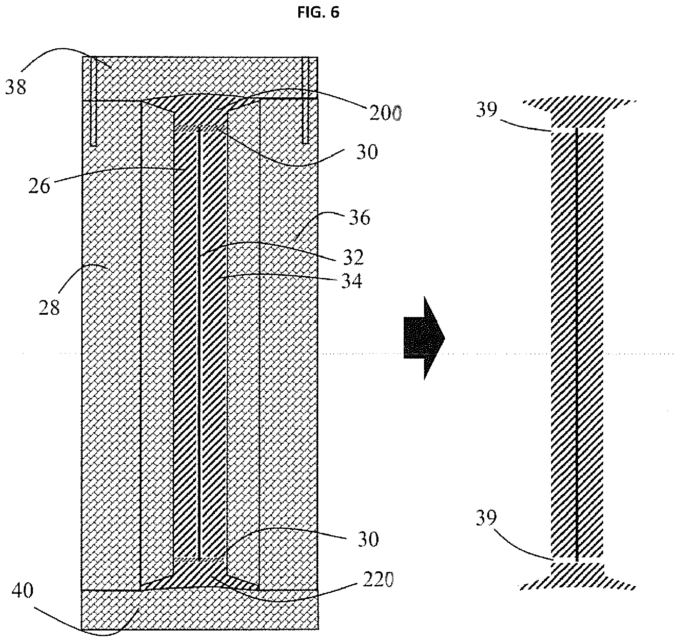

As depicted in Fig. 6, illustrating further steps of the manufacturing process, a further mold element 36 is provided opposite of the mold element 28, in contact with the second layer 34. The mold element 36 may be identical to the mold element 28. Flanges 200, 220 are also provided at each end of first and second layers 26, 34. Flanges 200, 220 may be in contact with the pins 30. Flanges 200, 220 may comprise (or may be made of) uncured (e.g. green) rubber.

Mold cap elements 38, 40 are also provided on top of each of the flanges 200, 220 and are also in (direct) contact with the mold elements 28, 36 so as to seal the uncured rubber in the mold comprising the mold elements 28, 36 and the mold cap elements 38, 40.

The mold may then be heated to an elevated temperature sufficient to cure partially the rubber. When the rubber is partially cured, the mold is disassembled, and the spoke, comprising the merged first and second layers 26, 34, flanges 200, 220, in embodiments also the tubes 31, and reinforcement cord 32, is removed from it. The spoke is thus a monolith. Of course, when the mold is disassembled, the pins 30 are also removed, leaving holes 39 in the spoke. In other words, the pins 30 are placeholders so that the spoke comprises holes 39 where the pins were located. In embodiments, (at least some of) the holes 39 are through holes.

The spoke may comprise an array of first holes at the radially outer end, with the first U-turns being centered on the first holes, and an array of second holes at the radially inner end, with the second U-turns being centered on the second holes.

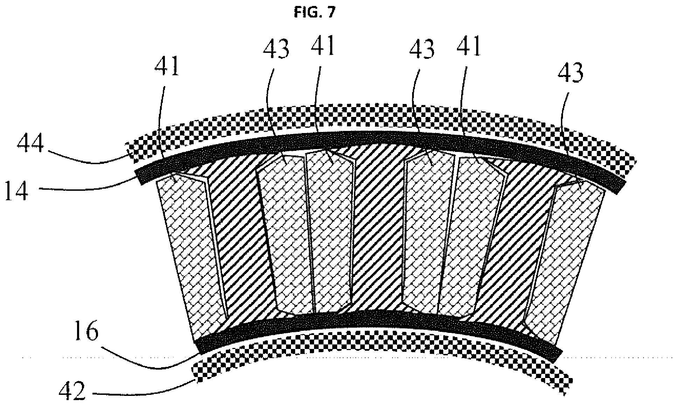

With reference to Fig.7, in a subsequent step, a plurality of spokes 18 are arranged in a circular pattern between the inner shearband 16 and the outer shearband 14. In other embodiments, inner shearband 16 may be dispensed with (in that case, the spokes are arranged on the wheel hub) or be replaced by (reinforced) plastic. The spokes 18 are separated by one or more interstitial mold elements 41, 43, which may be of trapezoic form. The interstitial mold elements 41, 43 may be the same or be different in shape. The interstitial mold elements 41, 43 provide support for the spokes during curing and suppress, or at least mitigate, deformation of the spokes during curing. The shearbands 14, 16 may comprise uncured rubber (e.g. green rubber) on the side intended to (directly) contact with the flanges 200, 220 of the spokes 18. The spokes and shearband are placed in a mold comprising inner mold element 42 and an outer mold element 44. The mold elements 42, 44 may be substantially in the form of a tube. The mold may be sealed e.g. by other mold elements (not depicted).

In more details, the inner shearband 16 may be wrapped around the inner mold element 42, the spokes 18 and interstitial mold elements 41, 43 may then be placed. The outer shearband 14 may then be wrapped around the spokes 18 and covered by the outer mold element 44.

The mold may then be heated to an elevated temperature, sufficient to (fully) cure the rubber. It should be noted that, in case of green rubber, the combination of elevated temperatures and high pressure causes vulcanization of the rubber. When the rubber is cured, the mold is disassembled and the cured (monolithic) product, comprising the shearbands merged with the spokes, is removed from it.

The annular tread 12 (see Fig. 1) for contacting ground may be provided on the outer shearband 14.

In embodiments (e.g. as depicted in the present document) the web of the spokes is planar, or at least essentially planar. In other embodiments, the web of the spokes is curved. In that case, the mold elements 28, 38 and/or the mold elements 41, 43 may be modified for providing the spokes with a web having curved outer surfaces. For examples, the web of the spokes may all be curved in the same angular direction about a tire axis.

It will be appreciated that embodiments of the present inventions allow for a lightweight, high tensile, highly compressible and highly flexible connecting structures, in particular spokes, with a high yield point/domain.

## Claims

1. A reinforced rubber spoke for a non-pneumatic tire (10), the reinforced rubber spoke (18) comprising:
a radially outer end (20) for connecting the spoke (18) to a shearband (22);
a radially inner end (22) for connecting the spoke (18) to a hub (17); and
a web (24) extending between the radially inner end (22) and the radially outer end (20), the web (24) comprising therein reinforcement cord (32) serpentining between the radially inner end (22) and the radially outer end (20).

2. The spoke as claimed in claim 1, wherein the serpentining reinforcement cord (32) is embedded between a first layer of rubber (26) and a second layer of rubber (34).

3. The spoke as claimed in claim 1 or 2, wherein the serpentining reinforcement cord (32) comprises first U-turns at the radially outer end (20) and second U-turns at the radially inner end (22) of the spoke (18), and, optionally, wherein the spoke (18) comprises an array of first holes (39) at the radially outer end (20), the first U-turns being centered on the first holes (39), and an array of second holes (39) at the radially inner end (22), the second U-turns being centered on the second holes (39).

4. The spoke as claimed in claim 3, wherein at least one of the first and second holes (19) are through-holes extending through the spoke (18) and/or wherein the spoke (18) comprises a tube (31) arranged between each U-turn and the corresponding hole (19).

5. The spoke as claimed in at least one of the previous claims, wherein the radially outer end (20) comprises a flange (200) for connecting the spoke (18) to the shearband (22) and/or wherein the radially inner end (22) comprises a flange (220) for connecting the spoke (18) to the hub (17).

6. A non-pneumatic tire comprising an annular tread (20) for contacting ground, a shearband (22) supporting the tread (20) and a connecting structure (16) for connecting the shearband (22) to a wheel hub (17), the connecting structure (16) comprising a plurality of a reinforced rubber spokes (18), at least one or each of said spokes (18) being a spoke in accordance with at least one of the previous claims.

7. A non-pneumatic tire comprising an annular tread (20) for contacting ground, a shearband (22) supporting the tread (20) and a connecting structure (16) for connecting the shearband (22) to a wheel hub (17), the connecting structure (16) comprising a plurality of a reinforced rubber spokes (18), each spoke (15) comprising: a radially outer end (20) connecting the spoke (18) to the shearband (22), a radially inner end (22) connecting the spoke (18) to the wheel hub (17) and a web (24) extending between the radially inner end (22) and the radially outer end (20), the web (24) comprising reinforcement cord (32) sandwiched between a first layer of rubber (26) and a second layer of rubber (34), the reinforcement cord (32) serpentining between the radially inner end (22) and the radially outer end (20).

8. The non-pneumatic tire of claim 6 or 7, wherein the first and second layers of rubber (26, 34) are symmetric, so that the serpentining reinforcement cord (32) is located in a median surface of the web (24).

9. The non-pneumatic tire of claim 6 or 7, wherein the first and second layers of rubber (26, 34) have different thickness, so that the serpentining reinforcement cord (32) is located in an off-median surface of the web (24).

10. The non-pneumatic tire of at least one of the claims 6 to 9, wherein the serpentining reinforcement cord (32) comprises U-turns at the radially outer end (20) and oppositely oriented U-turns at the radially inner end (20) of the spoke (18).

11. The non-pneumatic tire of at least one of the claims 6 to 10, wherein the spoke (18) comprises an array of first holes (39) at the radially outer end (20), the U-turns at the radially outer end being centered each on a respective one of the first holes (39), and an array of second holes (39) at the radially inner end (22), the U-turns at the radially inner end being centered each on a respective one of the second holes (39).

12. The non-pneumatic tire of at least one of the claims 6 to 11, wherein the first holes or the second holes, or both, are through-holes extending through the spoke (18).

13. The non-pneumatic tire of at least one of the claims 6 to 12, wherein the spoke (18) comprises a tube (31) arranged between each U-turn and the respective hole (39).

14. The non-pneumatic tire of at least one of the claims 6 to 13, wherein the webs (24) of the spokes (18) are all curved in the same angular direction about a tire axis.

15. The non-pneumatic tire of at least one of the claims 6 to 14, wherein each of the radially outer ends (20) of the spokes (18) comprises a flange (200) for connecting the spoke (18) to the shearband (22); and/or wherein each of the radially inner ends (22) of the spokes (18) comprises a flange (220) for connecting the spoke (18) to a hub (17).
